# EUROPÄISCHE PATENTANMELDUNG

(11) **EP 1 076 023 A1**
(43) Veröffentlichungstag der Anmeldung: **14.02.2001**
(21) Anmeldenummer: 00116289.0
(22) Anmeldetag: 10.08.2000
(51) Int. Cl.: B65G 53/46

(54) **Zellenradschleuse**

(30) Priorität: 11.08.1999 DE 19937979
(71) Anmelder: SCHENKMANN & PIEL, VERFAHRENSTECHNIK GmbH & Co. KG, D-51381 Leverkusen (DE)
(72) Erfinder: Allerödder, Wolfgang, Dipl.-Ing., 50935 Köln (DE)
(74) Vertreter: Patentanwälte Lippert, Stachow, Schmidt & Partner

(57) **Zusammenfassung**

Um Leckageverluste bei einer Zellenradschleuse zu minimieren, werden als Dichtelemente zwischen den mit unterschiedlichem Druck beaufschlagten Teilen der Förderleitung umlaufende Dichtbänder (6, 7) vorgeschlagen, die seitlich zum Schleusenrad (1) angeordnet sind und über Reibschluß von dem sich drehenden Schleusenrad (1) angetrieben werden. Die Dichtbänder (6, 7) laufen über Rollen (8, 9, 10 bzw. 11, 12, 13), die an den Eckpunkten eines stumpfen Dreiecks angeordnet sind. Durch jeweils mindestens eine radial zum Schleusenrad verstellbare Rolle (9 bzw. 12) kann der Bandzug und damit die Dichtwirkung der Dichtbänder (6, 7) eingestellt werden.

## Beschreibung

Die Erfindung betrifft eine Zellenradschleuse zum Fördern von Flüssigkeiten, Schüttgütern oder dergleichen aus einem ersten Teil einer Förderleitung in einen zweiten Teil, wobei im ersten und zweiten Teil unterschiedliche Drücke und/oder Gase vorhanden sind und das Fördergut mittels eines drehantreibbaren, im Querschnitt etwa sternförmigen Schleusenrades vom ersten in den zweiten Teil gefördert wird, welches Schleusenrad mehrere durch Stege begrenzte Förderkammern aufweist, die gegen einen Durchtritt des gasförmigen Mediums in der Förderleitung vom ersten in den zweiten Teil abdichtbar sind.

Derartige Druckschleusen werden in großem Umfang z. B. in der Entstaubungstechnik und bei pneumatischen Förderanlagen im Bereich der Holzwerkstoffindustrie, der Papierindustrie oder der chemischen Industrie verwendet. Zum Abdichten der einzelnen Förderkammern des Schleusenrades werden beim Stand der Technik elastische Dichtleisten verwendet, die einen Durchtritt des gasförmigen Mediums innerhalb der Förderleitung vom ersten in den zweiten Teil verhindern sollen. Die sternförmigen Schleusenräder sind üblicherweise mit horizontaler Drehachse in der Förderleitung angeordnet, so daß sie von oben befüllt werden und sich automatisch nach unten entleeren.

Die seitlichen Köpfe der Schleusenräder sind üblicherweise geschlossen und werden von seitlichen Gehäusedeckeln dichtend umgriffen.

Insbesondere bei physikalisch chemischen Verfahren, bei denen im ersten und zweiten Teil der Förderleitung unterschiedliche Gase und/oder Drücke angewendet werden, ist die bisherige Abdichtungstechnik jedoch unbefriedigend, da es relativ rasch zu einem Verschleiß der Dichtleisten kommt und somit, insbesondere wenn unterschiedliche Druckverhältnisse herrschen, Gase in größerem Umfang vom ersten in den zweiten Teil der Förderleitung übertreten können. Diese Leckagen führen beispielsweise auch bei der Verwendung von Heißdampf in einem Teil der Förderleitung zu nicht unerheblichen Energieverlusten.

Der Erfindung liegt die Aufgabe zugrunde, eine Zellenradschleuse der eingangs erwähnten Art zu schaffen, bei der die Abdichtung des ersten Teils der Förderleitung gegen den zweiten Teil verbessert ist.

Diese Aufgabe wird erfindungsgemäß dadurch gelöst, daß die Abdichtung aus seitlich zum Schleusenrad angeordneten, umlaufenden, über Rollen geführten Dichtbändern besteht, die jeweils mindestens eine Förderkammer dichtend übergreifen.

Durch die umlaufenden Dichtbänder zu beiden Seiten des Schleusenrades, die vorteilhaft als Schleppbänder ausgebildet sind, d. h. die durch die Reibungskraft der Stegköpfe der Förderkammern angetrieben werden, ist kein abrasiver Verschleiß zwischen den Dichtungen und dem Schleusenrad mehr gegeben, so daß bei hoher Lebensdauer eine erheblich verbesserte Abdichtung zwischen den beiden Teilen der Förderleitung erreicht werden kann.

Es sei erläuternd erwähnt, daß im Sinne der Erfindung mit dem Begriff zweiter Teil der Förderleitung auch beispielsweise ein Sammelbehälter, eine Übergabestation für das Fördergut oder dergleichen gemeint ist.

Die erfindungsgemäßen Dichtbänder laufen vorzugsweise, die Schleusenräder in deren Längsrichtung seitlich abdeckend, über jeweils drei Drehrollen, die etwa parallel zur Achse des Schleusenrades in Längsrichtung der Schleusenräder verlaufen. Die Anordnung der Rollen ist dabei vorzugsweise so gewählt, daß diese die Eckpunkte eines gleichschenkligen, stumpfen Dreiecks bilden, wobei die Rolle, die den Scheitelpunkt des stumpfen Winkels bildet, vorzugsweise in radialer Richtung zum Schleusenrad verstellbar sein kann. Auf diese Weise kann die Bandspannung des um die Rollen geführten Dichtbandes problemlos variiert werden, so daß beispielsweise eine Längung des Dichtbandes ausgeglichen werden kann. Auch kann durch die jeweilige Stellung dieser Rolle Einfluß auf den Reibkoeffizienten zwischen den Schleusenradstegen und den Dichtbändern genommen werden, so daß der Reibantrieb in jedem Falle gewährleistet ist.

Darüber hinaus ist es auch möglich, eine oder mehrere der Rollen zusätzlich senkrecht zu ihrer Längsachse zu verstellen, um Relativverschiebungen des Bandes in Richtung der Schleusenradlängsachse zu verhindern.

Während in der bevorzugten Ausführungsform, wie bereits erwähnt, ein schleppender Antrieb der Dichtbänder vorgesehen ist, ist es jedoch ebenso möglich, eine oder mehrere der Rollen motorisch anzutreiben, um beispielsweise die auf das Schleusenrad wirkende Antriebskraft zu verringern.

Durch die erwähnte Dreiecksanordnung der Rollen, über die das Dichtband geführt ist, ist eine wirksame Abdichtung der gasförmigen Medien im Inneren der Förderleitung auch nach außen möglich. So können beispielsweise die seitlichen Wandungsabschnitte der Förderleitung gegen die Dichtbänder im Bereich der äußeren Rollen anliegen, so daß auch hier praktisch keine Leckagen zu befürchten sind.

Vorzugsweise sind jedoch Dichttaschen vorgesehen, die die Dichtbänder bzw. die Förderleitung seitlich übergreifen. Durch diese praktisch druckdichten Dichttaschen kann im äußeren Umgebungsbereich der Dichtbänder ein Gegendruck aufgebaut werden, der das Ausströmen von Gasen aus dem Inneren der Förderleitung zusätzlich erschwert.

Um die Dichtwirkung des Förderbandes weiter zu erhöhen, können zusätzliche Andrückeinrichtungen wie Andrückrollen oder Druckplatten vorgesehen sein, die das Dichtband gegen die Kopfleisten der Schleusenradstege andrücken.

Die Dichtwirkung zwischen den Dichtbändern und den Schleusenköpfen kann gegebenenfalls auch dadurch erhöht werden, daß die Kopfseiten der Stege in Längsrichtung verlaufende Dichtleisten aufweisen, die sich gegen die Dichtbänder anlegen. Diese Dichtleisten können zur Vermeidung eines erhöhten Verschleißes auch federnd oder radial nachgebend an den Kopfseiten der Stege befestigt sein.

Die Materialauswahl für die Dichtbänder richtet sich im wesentlichen nach der Art des zu fördernden Gutes bzw. nach den herrschenden Temperaturen und Drücken. Mit gutem Erfolg konnten beispielsweise PTFE- oder Stahlbänder eingesetzt werden.

Im Inneren der Dichttaschen, die aus den beschriebenen Gründen auch Druckanschlüsse aufweisen können, sind, beispielsweise bei der Verwendung von Heißdampf als gasförmiges Medium, Kondensatabscheider zweckmäßig, die ein problemloses Entfernen des Kondensates aus den Dichttaschen ermöglichen.

Aufgrund der mitlaufenden Dichtbänder kann die Förderleitung auch ohne Beeinträchtigung der Dichtwirkung beispielsweise mit Vibratoren beaufschlagt werden, so daß ein Anbacken des Fördergutes an den Stegen der Förderkammern verhindert und für eine vollständige Entleerung nach unten gesorgt wird.

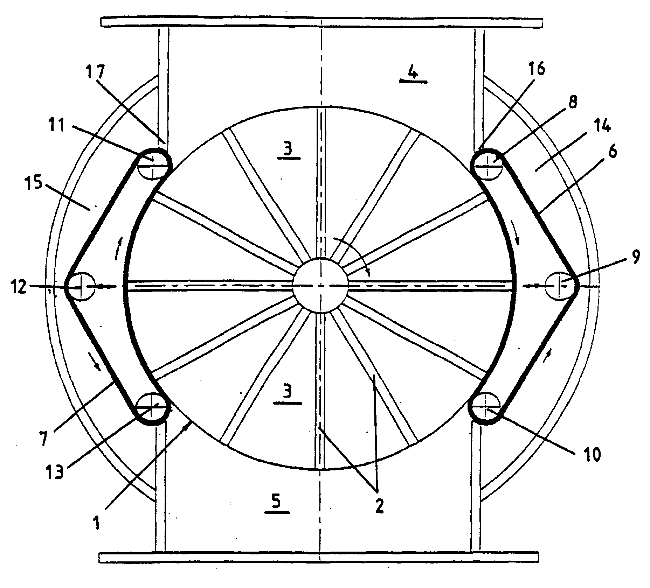

Die Erfindung ist in der Zeichnung beispielsweise veranschaulicht und wird im nachfolgenden anhand der Zeichnung im einzelnen beschrieben.

Die Zeichnungsfigur zeigt eine Schnittdarstellung einer in eine Förderleitung eingebauten Zellenradschleuse. Die Zellenradschleuse besteht im wesentlichen aus einem sternförmigen Schleusenrad 1, das mehrere durch Stege 2 begrenzte Förderkammern 3 aufweist. Oberhalb des Schleusenrades 1, das antreibbar gelagert ist, befindet sich der erste Teil 4 der Förderleitung, während sich ein zweiter Teil 5 der Förderleitung nach unten anschließt. Der erste Teil 4 und der zweite Teil 5 weisen unterschiedliche Drücke und/oder gasförmige Medien auf.

Ein nicht dargestelltes, im ersten Teil 4 der Förderleitung befindliches Fördergut fällt in die oberen Förderkammern 3 und wird aufgrund der Drehung des Schleusenrades 1 nach unten gefördert, wo es unter der Wirkung der Schwerkraft aus den Förderkammern 3 herausfällt.

Zur Abdichtung des ersten Teils 4 zum zweiten Teil 5 dienen zwei seitlich zum Schleusenrad 1 angeordnete, umlaufende Dichtbänder 6, 7, die über jeweils drei Rollen 8, 9, 10 bzw. 11, 12, 13 laufen. Während die jeweils äußeren Rollen 8, 10 bzw. 11, 13 bzgl. ihrer Lage fixiert sind, sind die mittleren Rollen 9 bzw. 12 radial zum Schleusenrad 1 verstellbar, so daß mit ihrer Hilfe der Bandzug der Dichtbänder 6, 7 eingestellt und geregelt werden kann.

Um Gasleckagen nach außen zu verhindern, sind seitlich zur Förderleitung teilkreisförmige Dichttaschen 14, 15 vorgesehen, die die Dichtbänder 6 bzw. 7 übergreifen. Die unteren Kanten 16 bzw. 17 des oberen ersten Teils 4 der Förderleitung liegen gegen die Außenseite der Dichtbänder 6, 7 im Bereich der Rollen 8, 11 dichtend an, so daß auch Leckageverluste ins Innere der Dichttaschen 14, 15 weitestgehend vermieden werden. Eine entsprechende Abdichtung ist im Bereich des zweiten Teils 5 der Förderleitung vorgesehen.

### Bezugszeichenliste

- 1: Schleusenrad
- 2: Steg
- 3: Förderkammer
- 4: erster Teil
- 5: zweiter Teil
- 6: Dichtband
- 7: Dichtband
- 8: Rolle
- 9: Rolle
- 10: Rolle
- 11: Rolle
- 12: Rolle
- 13: Rolle
- 14: Dichttasche
- 15: Dichttasche
- 16: untere Kante
- 17: untere Kante

## Patentansprüche

1. Zellenradschleuse zum Fördern von Flüssigkeiten, Schüttgütern oder dergleichen aus einem ersten Teil einer Förderleitung in einen zweiten Teil, wobei im ersten und zweiten Teil unterschiedliche Drücke und/oder Gase vorhanden sind und das Fördergut mittels eines drehantreibbaren, im Querschnitt etwa sternförmigen Schleusenrades vom ersten in den zweiten Teil gefördert wird, welches Schleusenrad mehrere durch Stege begrenzte Förderkammern aufweist, die gegen einen Durchtritt des gasförmigen Mediums in der Förderleitung vom ersten in den zweiten Teil abdichtbar sind, **dadurch gekennzeichnet,** daß die Abdichtung aus seitlich zum Schleusenrad (1) angeordneten, umlaufenden, über Rollen (7-13) geführten Dichtbändern (6, 7) besteht, die jeweils mindestens eine Förderkammer (3) dichtend übergreifen.

2. Zellenradschleuse nach Anspruch 1, **dadurch gekennzeichnet,** daß die Dichtbänder (6, 7) jeweils über mindestens drei sich etwa parallel zur Achse des Schleusenrades (1) angeordneten, zueinander beabstandeten Rollen (8, 9, 10 bzw. 11, 12, 13) geführt sind.

3. Zellenradschleuse nach Anspruch 1 oder 2, **dadurch gekennzeichnet,** daß mindestens eine der Rollen (9 bzw. 12) relativ zum Schleusenrad (1) verstellbar ist.

4. Zellenradschleuse nach einem der Ansprüche 1 bis 3, **dadurch gekennzeichnet,** daß mindestens eine der Rollen (8-10 bzw. 11-13) motorisch drehantreibbar ist.

5. Zellenradschleuse nach einem der Ansprüche 1 bis 4, **dadurch gekennzeichnet,** daß die Dichtbänder (6, 7) gegen die Wandung der Förderleitung abgedichtet sind.

6. Zellenradschleuse nach einem der Ansprüche 1 bis 5, **dadurch gekennzeichnet,** daß jeweils eine die Dichtbänder (6, 7) übergreifende, den ersten (4) und zweiten Teil (5) der Förderleitung verbindende Dichttasche (14, 15) vorgesehen ist.

7. Zellenradschleuse nach einem der Ansprüche 1 bis 6, **dadurch gekennzeichnet,** daß zum Anpressen des Dichtbandes (6, 7) an den Außenumfang des Schleusenrades (1) Andrückeinrichtungen wie Andrückrollen oder Druckplatten vorgesehen sind.

8. Zellenradschleuse nach einem der Ansprüche 1 bis 7, **dadurch gekennzeichnet,** daß die Stege (2) des Schleusenrades (1) an ihren Kopfseiten Dichtleisten aufweisen, die sich beim Einlaufen der Förderkammern (3) in die Dichtbänder (6, 7) gegen sie anlegen.

9. Zellenradschleuse nach Anspruch 8, **dadurch gekennzeichnet,** daß die Dichtleisten federnd oder radial nachgebend an den Kopfseiten der Stege (2) angeordnet sind.

10. Zellenradschleuse nach einem der Ansprüche 1 bis 9, **dadurch gekennzeichnet,** daß die Dichtbänder (6, 7) und/oder Dichtleisten aus einem Kunststoff wie PTFE oder Metall wie Stahl bestehen.

11. Zellenradschleuse nach Anspruch 6, **dadurch gekennzeichnet,** daß die Dichttaschen (14, 15) mit Druck beaufschlagbar sind.

12. Zellenradschleuse nach Anspruch 6, **dadurch gekennzeichnet,** daß in den Dichttaschen (14, 15) Kondensatabscheider vorgesehen sind.

13. Zellenradschleuse nach einem der Ansprüche 1 bis 13, **dadurch gekennzeichnet,** daß die Förderleitung bzw. das Schleusenrad (1) vibrationsbeaufschlagbar ausgebildet sind.
